# EUROPÄISCHE PATENTSCHRIFT

(11) **EP 1 200 313 B1**
(45) Veröffentlichungstag und Bekanntmachung des Hinweises auf die Patenterteilung: **19.02.2003**
(21) Anmeldenummer: 00956269.5
(22) Anmeldetag: 25.07.2000
(51) Int. Cl.: B65B 55/02, F16K 41/10

(54) **WANDDURCHFÜHRUNGSVORRICHTUNG**
LEADTHROUGH DEVICE FOR A WALL
SYSTEME DE TRAVERSEE MURALE

(30) Priorität: 29.07.1999 DE 29913283 U
(43) Veröffentlichungstag der Anmeldung: 02.05.2002
(73) Patentinhaber: GEA Finnah GmbH, 48683 Ahaus (DE)
(72) Erfinder: SCHMIDT, Andreas, D-48683 Ahaus (DE); NIEHR, Thomas, D-48683 Ahaus (DE)
(74) Vertreter: Busse & Busse Patentanwälte
(86) Internationale Anmeldenummer: EP0007090
(87) Internationale Veröffentlichungsnummer: WO01008981

(56) Entgegenhaltungen:
- DE-A- 3 215 799
- DE-A- 19 603 070

## Beschreibung

Die Erfindung bezieht sich auf eine Wanddurchführungsvorrichtung zur Übertragung von längsgerichteten Stellbewegungen aus einer unsterilen Umgebung auf der einen Wandseite in eine sterile Umgebung auf der anderen Wandseite, insbesondere in eine Sterilkammer, durch einen eine Wanddurchführungsöffnung durchgreifenden, axial verschieblichen Stößel.

Die Erfindung befaßt sich mit dem Problem einer sicheren Vermeidung einer Kontaminierung der sterilen Umgebung durch Stellbewegungen des Stößels der Wanddurchführungsvorrichtung. Die Erfindung löst dieses Problem durch eine Wanddurchführungsvorrichtung mit den Merkmalen des Anspruchs 1. Hinsichtlich wesentlicher weiterer Ausgestaltungen wird auf die Ansprüche 2 bis 14 verwiesen.

Die erfindungsgemäße Wanddurchführungsvorrichtung schirmt den Bereich des Stößels, welcher im Zuge seiner Betätigung seine Lage zwischen der sterilen und der unsterilen Wandseite wechselt, sowohl gegenüber der sterilen, als auch gegenüber der unsterilen Umgebung ab, so daß Keimverschleppungen aus der unsterilen Umgebung in die sterile Umgebung ausgeschlossen sind.

Zur Sterilisation der Führungsräume der Faltenbälge sowie zur Bildung einer sterilen Atmosphäre in den Führungsräumen sind diese mit Sterilluft und/oder einem Sterilisationsmittel, z.B. einem H₂O₂-Aerosol, beaufschlagbar, vorzugsweise ständig an eine Überdruck-Sterilluftquelle angeschlossen. Dies stellt sicher, daß auch bei Auftreten von Leckagen ein Eintritt von Keimen in die sterile Umgebung ausgeschlossen ist. Zudem kann über einen Druck- und/oder Strömungswächter in der Verbindung der Sterilluftquelle mit den Führungsräumen der Faltenbälge das Vorliegen einer Leckage ermittelt und angezeigt werden.

Weitere Einzelheiten und Wirkungen ergeben sich aus der nachfolgenden Beschreibung und der Zeichnung, in der ein Ausführungsbeispiel des Gegenstands der Erfindung näher veranschaulicht ist. In der Zeichnung zeigen:

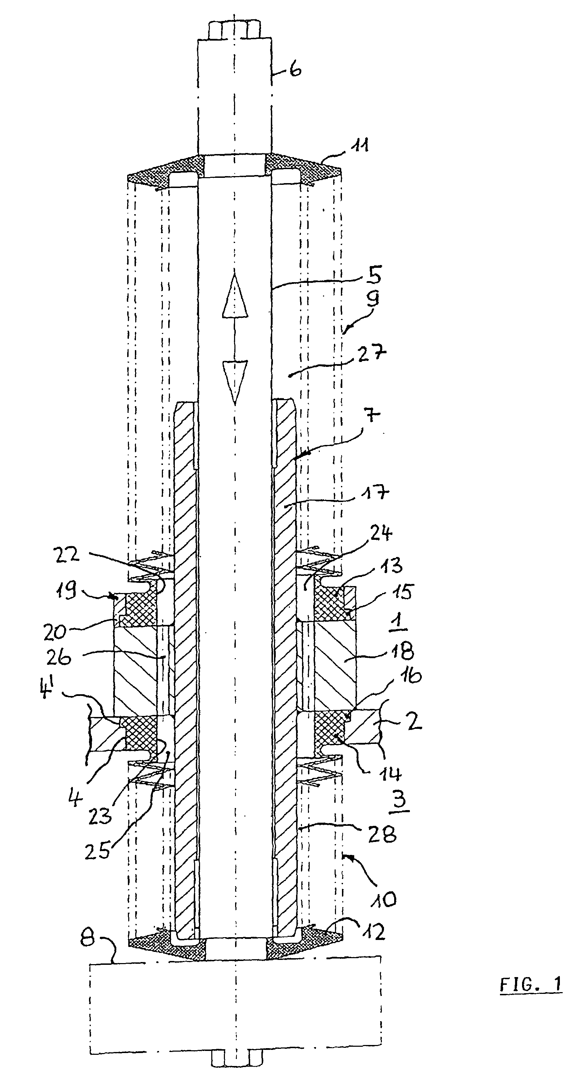

- Fig. 1: eine abgebrochene Darstellung einer in einer Wandung angebrachten Wanddurchführungsvorrichtung nach der Erfindung im Längsschnitt,

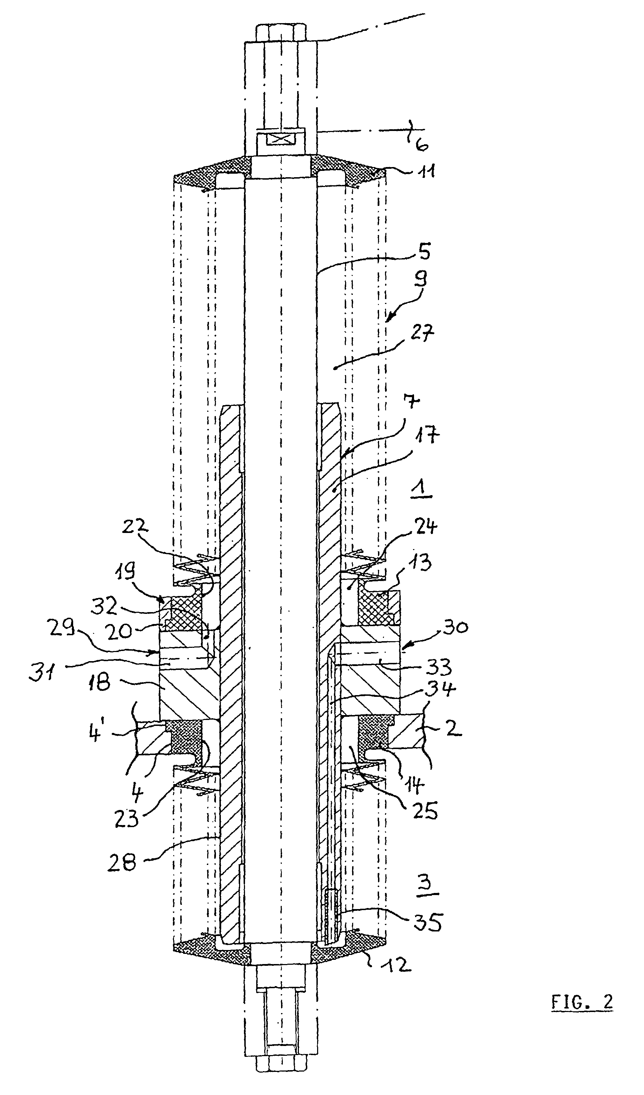

- Fig. 2: eine Darstellung der Vorrichtung nach Fig. 1 in einem Längsschnitt senkrecht zur Zeichenebene in Fig. 1, und

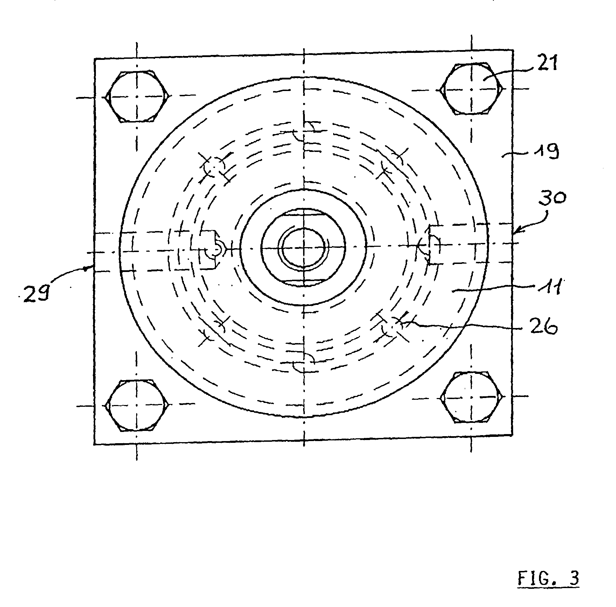

- Fig. 3: eine Draufsicht zu Fig. 2.

Die in der Zeichnung veranschaulichte Wanddurchführungsvorrichtung dient zur Übertragung einer längsgerichteten Stellbewegung aus einer unsterilen Umgebung 1 auf der einen Seite einer Wand 2 in eine sterile Umgebung 3 auf der anderen Wandseite. Die Wand 2 umgibt beispielsweise eine Sterilkammer, wie sie bei der Abfüllung von Nahrungs- oder Genußmitteln sowie Getränken zum Einsatz kommen, wo sie entsprechende Einheiten von Abfüllmaschinen umgeben.

Zur Übertragung der Stellbewegung ist ein eine Wanddurchführungsöffnung 4 durchgreifender, axial verschieblicher Stößel 5 vorgesehen, der in Richtung der eingezeichneten Pfeile von Hand oder durch ein nur schematisch angedeutetes Antriebsmittel 6 beweglich ist. Der Stößel 5 ist als zylindrische Stange mit zumindest im Hauptbereich gleichbleibendem Querschnitt ausgebildet und in einer Gleitlagerführung 7 axial verschieblich geführt. Er greift an irgendeinem nur schematisch angedeuteten Bauteil 8 an, das sich im Sterilbereich befindet und irgendwelcher Stellbewegungen bedarf.

Die Wanddurchführungsvorrichtung umfaßt ferner einen ersten, auf der unsterilen Seite 1 der Wand 2 angeordneten Faltenbalg 9 und einen auf der sterilen Wandseite 3 befindlichen zweiten Faltenbalg 10. Beide Faltenbälge 9,10 sind untereinander vorzugsweise gleich ausgestaltet und bestehen aus elastischem Kunststoff, z.B. Teflon. Beide Faltenbälge 9,10 haben jeweils einen Kappenteil 11,12 und einen Fußteil 13,14, der im wesentlichen die Form eines zylindrischen Ringkörpers aufweist und an seinem Außenende mit einem Ringbund 15 bzw. 16 versehen ist.

Die Gleitlagerführung 7 besteht im einzelnen aus einem zylindrischem Führungsteil 17, das mittig von einem bei dem dargestellten Beispiel quadratischen Flanschteil 18 umgeben ist. Dieser mit dem Führungsteil 17 verschweißte Flanschteil 18 findet Aufnahme zwischen den Fußteilen 13, 14 der Faltenbälge 9,10. Zur Verbindung der Faltenbälge 9,10 im Bereich ihrer Fußteile 13,14 mit dem Flanschteil 18 der Gleitlagerführung 7 ist ein Spannstück 19 mit ebenfalls quadratischer Außenkontur vorgesehen, das den Fußteil 13 umgibt, dabei auf dem Ringbund 15 aufliegt und mit einem ringförmigen Ansatz 20 diesen umgibt. In der Einbaustellung der Teile nimmt der Fußteil 14 des Faltenbalges 10 die Wanddurchführungsöffnung 4 im Preßsitz dichtend ein, wobei der Ringbund 16 in einer Erweiterung 4' der Wanddurchführungsöffnung 4 aufgenommen ist. Zur Verspannung der Teile sind in Eckbereichen des Spannstücks 19 Schrauben 21 vorgesehen, mit denen das Spannstück 19 auf die Wand 2 auf der unsterilen Seite 1 aufgeschraubt wird. Beim Anziehen der Schrauben 21 werden durch entsprechende Abmessungsvorgaben gleichzeitig die Ringbunde 15,16 zur Herbeiführung eines Dichtungsabschlusses zwischen den Teilen 13,14,18 und 4' geringfügig axial zusammengepreßt.

Die Fußteile 13,14 der Faltenbälge 9,10 umgrenzen fluchtende axiale Bohrungen 22,23, die den zylindrischen Führungsteil 17 der Gleitlagerführung 7 jeweils im Abstand unter Bildung eines Ringspaltes 24,25 umgeben. Diese axialen Ringspalte 24,25, die durch den Flanschteil 18 der Gleitlagerführung 7 getrennt sind, stehen über eine Anzahl von um den Stößel 5 herum verteilt angeordneten axialen Übergangsbohrungen 26 im Flanschteil 18 in gegenseitiger Verbindung.

Im Bereich seiner Enden ist der Stößel 5 jeweils mit der Kappe 11 bzw. der Faltenbälge 9,10 unter Abdichtung fest verbunden. Die Faltenbälge 9,10 umschließen jeweils einen Führungsraum 27 bzw. 28, der gegenüber der jeweiligen Umgebung 1,3 vollständig abgedichtet ist. Die Führungsräume 27,28 stehen über die Übergangsöffnungen 26 in gegenseitiger Verbindung, so daß bei einer Axialverschiebung des Stößels 5 ein Druckausgleich eintritt. Befindet sich der Stößel 5 in einer Mittelstellung in bezug auf die Wand 2, dann haben bevorzugt die Führungsräume 27,28 ein untereinander gleiches Volumen. Innerhalb der Führungsräume 27,28 können bei Bedarf (nicht dargestellte) Spiraldruckfedern vorgesehen sein, die sich beispielsweise jeweils an der Kappe 11,12 der Faltenbälge 9,10 und dem jeweils gleichseitigen Ende des Führungsteils 17 abstützen und den Stößel 5 vorspannen, z.B. in einer Mittelstellung zur Wand 2.

Die Führungsräume 27,28 sind für einen Beaufschlagung mit einem Sterilisationsmittel zum Zwecke ihrer Sterilisierung, z.B. einem H₂O₂-Aerosol, mit einem Einlaßkanal 29 und einem Auslaßkanal 30 versehen, die beide bedarfsweise an ihren Außenenden durch z.B. eine Verschlußschraube dicht verschließbar sind. Der Einlaßkanal 29 umfaßt eine Radialbohrung 31 im Flanschteil 18 der Gleitlagerführung 7, die in eine in den Führungsraum 27 ausmündende, axiale Bohrung 32 übergeht. Der Einlaßkanal 29 ist an seinem Außenende bevorzugt durch eine Verbindungsleitung mit einer Überdruck-Sterilluftquelle verbindbar, die vorzugsweise die Führungsräume 27,28 ständig mit Sterilluft unter leichtem Überdruck beaufschlagt, so daß im Falle auftretender Leckagen sichergestellt ist, daß keinerlei Keime von der unsterilen Umgebung 1 her in den sterilen Bereich 3 gelangen können. Durch einen Druck- oder Strömungswächter, der der Verbindungsleitung zur Sterilluftquelle zugeordnet sein kann, können Leckagen, sobald sie auftreten, auch angezeigt werden.

Der Auslaßkanal 30 umfaßt ebenfalls eine Radialbohrung 33 im Flanschteil 18 der Gleitlagerführung 7, die in eine axiale Bohrung 34 übergeht, die sich durch den Führungsteil 17 der Gleitlagerführung 7 hindurcherstreckt und an deren Ende ausmündet in den Führungsraum 28 des Faltenbalges 10. Über diesen Auslaßkanal 30 kann im Spülungsfalle Sterilluft austreten oder aber Aerosol-Kondensat ausgeblasen werden. Hierzu kann ein Einsatzröhrchen 35 im Endteil der Bohrung 34 vorgesehen sein, das bis an die Innenseite der Kappe 12 heranreicht.

Die Wanddurchführungsvorrichtung nach der Erfindung sichert nicht nur eine einfache und präzise Montage der Vorrichtungsteile in einer Wanddurchführungsöffnung, sondern gewährleistet auch eine sichere Absperrung der Durchführung gegen einen Durchtritt von Keimen, der eine Kontaminierung der sterilen Umgebung mit schwerwiegenden Folgen für den Produktionsablauf in diesem Bereich zur Folge hätte. Selbst bei auftretenden Leckagen ist die sichere Abschirmung des sterilen Bereiches gewährleistet, so daß Reparaturen von Leckagen zu irgendeinem wählbaren Zeitpunkt, z.B. bei einer Umrüstung der Maschine in der sterilen Umgebung, vorgenommen werden können. Durch den symmetrischen Aufbau der Vorrichtung sind Druckschwankungen innerhalb der Führungsräume 27,28 der Faltenbälge 9,10 ausgeschlossen.

## Patentansprüche

1. Wanddurchführungsvorrichtung zur Übertragung einer längsgerichteten Stellbewegung aus einer unsterilen Umgebung (1) auf der einen Wandseite in eine sterile Umgebung (3) auf der anderen Wandseite, insbesondere in eine Sterilkammer, durch einen eine Wanddurchführungsöffnung (4) durchgreifenden, axialverschieblichen Stößel (5), **dadurch gekennzeichnet, daß** der Stößel (5) auf beiden Seiten (1,3) der Wand (2) von einem Faltenbalg (9,10) umgeben ist, der jeweils einen abgedichteten Führungsraum (27,28) für den Stößel (5) umgrenzt, und die Führungsräume (27,28) der Faltenbälge (9,10) durch axiale Übergangsbohrungen (26) untereinander in Druckausgleichsverbindung stehen.

2. Wanddurchführungsvorrichtung nach Anspruch 1, **dadurch gekennzeichnet, daß** in den Führungsräumen (27,28) der Faltenbälge (9,10) eine sterile Atmosphäre vorliegt.

3. Wanddurchführungsvorrichtung nach Anspruch 1 oder 2, **dadurch gekennzeichnet, daß** die Führungsräume (27,28) der Faltenbälge (9,10) mit Sterilluft und/oder einem Sterilisationsmittel beaufschlagbar sind.

4. Wanddurchführungsvorrichtung nach Anspruch 3, **dadurch gekennzeichnet, daß** die Führungsräume (27,28) der Faltenbälge (9,10) ständig an eine Überdruck-Sterilluftquelle angeschlossen sind.

5. Wanddurchführungsvorrichtung nach einem der Anspruch 2 bis 4, **dadurch gekennzeichnet, daß** die Führungsräume (27,28) der Faltenbälge (9,10) für ihre Beaufschlagung an einen Einlaßkanal (29) und an einen Auslaßkanal (30) angeschlossen und diese an ihren Außenenden verschließbar sind.

6. Wanddurchführungsvorrichtung nach Anspruch 5, **dadurch gekennzeichnet, daß** der Einlaßkanal (29) und der Auslaßkanal (30) zu den Führungsräumen (27,28) der Faltenbälge (9,10) Radialbohrungen (31,33) im Flanschteil (18) der Gleitlagerführung (7) umfassen, die in axiale, jeweils in einen Führungsraum (27,28) mündende Bohrungen (32,34) übergehen.

7. Wanddurchführungsvorrichtung nach Anspruch 6, **dadurch gekennzeichnet, daß** der Einlaßkanal (29) in den Führungsraum (27) des auf der unsterilen Wandseite (1) gelegenen Faltenbalgs (9) einmündet und der Auslaßkanal (30) aus dem Führungsraum (28) des auf der sterilen Wandseite (3) angeordneten Faltenbalges (10) ausmündet.

8. Wanddurchführungsvorrichtung nach Anspruch 4, **dadurch gekennzeichnet, daß** einer Dauerverbindung der Sterilluftquelle mit den Führungsräumen (27,28) der Faltenbälge (9,10) oder letzteren ein Druck- und/oder Strömungswächter zur Ermittlung einer Leckage angeordnet ist.

9. Wanddurchführungsvorrichtung nach einem der Ansprüche 1 bis 8, **dadurch gekennzeichnet, daß** der Stößel (5) auf beiden Wandseiten (1,3) von einer Spiraldruckfeder umgeben ist, die innerhalb der Führungsräume (27,28) der Faltenbälge (9,10) angeordnet und bestrebt sind, den Stößel (5) in einer Mittellage zur Wand (2) zu halten.

10. Wanddurchführungsvorrichtung nach einem der Ansprüche 1 bis 9, **dadurch gekennzeichnet, daß** die Faltenbälge (9,10) jeweils einen Fußteil (13,14) in Form eines Ringkörpers aufweisen und mit diesem auf entgegengesetzten Seiten des Flanschteils (18) unter Abdichtung festgelegt sind.

11. Wanddurchführungsvorrichtung nach Anspruch 10, **dadurch gekennzeichnet, daß** die Fußteile (13,14) der Faltenbälge (9,10) den Führungsteil (17) der Gleitlagerführung (7) unter Belassung jeweils eines Ringspaltes (24,25) umgeben und die Übergangsbohrungen im Flanschteil (18) der Gleitlagerführung (7) angeordnet und die Ringspalten (24,25) untereinander verbunden sind.

12. Wanddurchführungsvorrichtung nach Anspruch 11, **dadurch gekennzeichnet, daß** der Flanschteil (18) der Gleitlagerführung (7) mittels eines Spannstücks (19) mit der Wand (2) auf deren unsterilen Seite (1) verschraubt ist und den Fußteil (13) des Faltenbalges (9) unter Abdichtung auf dem Flanschteil (18) anpreßt.

13. Wanddurchführungsvorrichtung nach Anspruch 12, **dadurch gekennzeichnet, daß** der Fußteil (14) des auf der sterilen Wandseite (3) angeordneten Faltenbalges (10) in Einbaustellung der Vorrichtungsteile die Wanddurchführungsöffnung (4) einnimmt, wobei ein das freie Ende des Fußteils (14) umgebender Ringbund (16) in einer an die unsterile Wandseite (1) angrenzenden Erweiterung (4') der Wanddurchführungsöffnung (4) aufgenommen und axial fixiert ist.

## Claims

1. Lead-through device for a wall for the transfer of a longitudinally-aligned actuation movement from a non-sterile environment (1) on one side of the wall into a sterile environment (3) on the other side of the wall, in particular into a sterile chamber, by means of an axially-displaceable tappet (5) engaging through a lead-through aperture (4) in the wall, **characterised in that** the tappet (5) is surrounded on both sides (1,3) of the wall (2) by a concertina-type element (9,10), which in each case surrounds a sealed guide area (27,28) for the tappet (5), and the guide areas (27,28) of the concertina-type element (9,10) are in pressure-compensation connection with one another by means of axial transition holes (26).

2. Lead-through device for a wall according to claim 1, **characterised in that** a sterile atmosphere pertains in the guide areas (27,28) of the concertina-type elements (9,10).

3. Lead-through device for a wall according to claim 1 or 2, **characterised in that** the guide areas (27,28) of the concertina-type elements (9,10) are capable of being subjected to sterile air and/or a sterilisation medium.

4. Lead-through device for a wall according to claim 3, **characterised in that** the guide areas (27,28) of the concertina type elements (9,10) are permanently connected to an overpressure sterile air source.

5. Lead-through device for a wall according to one of claims 2 to 4, **characterised in that** the guide areas (27,28) of the concertina-type elements (9,10) are connected to an intake channel (29) and an outlet channel (30) for the imposition of pressure, and that these are capable of being closed at their outer ends.

6. Lead-through device for a wall according to claim 5, **characterised in that** the intake channel (29) and the outlet channel (30) to the guide areas (27,28) of the concertina-type elements (9,10) comprise radial holes (31,33) in the flange part (18) of the slide bearing guide (7), which pass into axial holes (32,34) opening in each case into a guide area (27,28).

7. Lead-through device for a wall according to claim 6, **characterised in that** the intake channel (29) opens into the guide area (27) of the concertina-type element (9) located on the non-sterile side of the wall (1), and the outlet channel (30) opens out of the guide area (28) of the concertina-type element (10) arranged on the sterile side of the wall (3).

8. Lead-through device for a wall according to claim 4, **characterised in that** a pressure and/or flow monitor for leak detection is arranged in a permanent connection of the sterile air source with the guide areas (27,28) of the concertina-type elements (9,10) or the latter.

9. Lead-through device for a wall according to one of claims 1 to 8, **characterised in that** the tappet (5) is surrounded on both sides of the wall (1,3) by a helical pressure spring, which is arranged and stressed inside the guide areas (27,28) of the concertina-type elements (9,10), in order to hold the tappet (5) in a central position in relation to the wall (2).

10. Lead-through device for a wall according to one of claims 1 to 9, **characterised in that** the concertina-type elements (9,10) in each case feature a foot element (13,14) in the form of an annular body, and are secured to this on opposing sides of the flange part (18), under a seal.

11. Lead-through device for a wall according to claim 10, **characterised in that** the foot parts (13,14) of the concertina-type elements (9,10) surround the guide part (17) of the slide bearing guide (7), leaving in each case an annular gap (24,25) and the transition holes are arranged in the flange part (18) of the slide bearing guide (7) and the annular gaps (24,25) are connected to one another.

12. Lead-through device for a wall according to claim 11, **characterised in that** the flange part (18) of the slide bearing guide (7) are bolted to the wall (2) on the non-sterile side (1) by means of a tensioning element (19), and press the foot part (13) of the concertina-type element (9) onto the flange part (18) under a seal.

13. Lead-through device for a wall according to claim 12, **characterised in that** the foot part (14) of the concertina-type element (10) arranged on the sterile side of the wall (3) incorporates the wall lead-through aperture (4) in the installation position of the device parts, whereby a ringshaped collar (16) surrounding the free end of the foot part (14) is accommodated in an extension (4') of the lead-through opening (4) adjoining the non-sterile side of the wall (1), and is axially fixed in position.

## Revendications

1. Dispositif de traversée murale destiné à transmettre un mouvement de positionnement dirigé longitudinalement depuis un environnement non stérile (1) sur l'un des côtés de paroi dans un environnement stérile (3) à l'autre côté de paroi, en particulier dans une chambre stérile, par une tige de commande (5) pouvant être déplacée axialement et pénétrant à travers une ouverture de traversée murale (4), **caractérisé en ce que** la tige de commande (5) est entourée sur les deux côtés (1,3) de la paroi (2) d'un soufflet (9,10) qui à chaque fois délimite un espace de guidage (27,28) rendu étanche pour la tige de commande (5), et les espaces de guidage (27,28) des soufflets (9,10) se trouvent en communication d'équilibre des pressions l'un avec l'autre par des orifices de transfert (26) axiaux.

2. Dispositif de traversée murale selon la revendication 1, **caractérisé en ce qu'**une atmosphère stérile est présente dans les espaces de guidage (27,28) des soufflets (9,10).

3. Dispositif de traversée murale selon la revendication 1 ou 2, **caractérisé en ce que** les espaces de guidage (27,28) des soufflets (9,10) peuvent être alimentés en air stérile et/ou en agent de stérilisation.

4. Dispositif de traversée murale selon la revendication 3, **caractérisé en ce que** les espaces de guidage (27,28) des soufflets (9,10) sont raccordés en permanence à une source d'air stérile en surpression.

5. Dispositif de traversée murale selon l'une quelconque des revendications 2 à 4, **caractérisé en ce que** les espaces de guidage (27,28) des soufflets (9,10) sont raccordés pour leur alimentation à un canal d'admission (29) et à un canal de sortie (30) et ceux-ci peuvent être obturés à leurs extrémités extérieures.

6. Dispositif de traversée murale selon la revendication 5, **caractérisé en ce que** le canal d'admission (29) et le canal de sortie (30) comportent des orifices radiaux (31,33) par rapport aux espaces de guidage (27,28) des soufflets (9, 10) dans la partie bride (18) du guidage à palier lisse (7), qui se transforment en orifices axiaux (32,34) débouchant respectivement dans un espace de guidage (27,28).

7. Dispositif de traversée murale selon la revendication 6, **caractérisé en ce que** le canal d'admission (29) débouche dans l'espace de guidage (27) du soufflet (9) situé sur le côté de paroi non stérile (1) et le canal de sortie (30) débouche de l'espace de guidage (28) du soufflet (10) disposé sur le côté de paroi stérile (3).

8. Dispositif de traversée murale selon la revendication 4, **caractérisé en ce qu'**un avertisseur de pression et/ou d'écoulement destiné à déterminer une fuite est affecté à un raccordement permanent d'une source d'air stérile aux espaces de guidage (27,28) des soufflets (9,10) ou à ces derniers.

9. Dispositif de traversée murale selon l'une quelconque des revendications 1 à 8, **caractérisé en ce que** la tige de commande (5) est entourée sur les deux côtés de paroi (1,3) d'un ressort de compression spiralé qui sont disposés à l'intérieur des espaces de guidage (27,28) des soufflets (9,10) et tendent à maintenir la tige de commande (5) dans une position centrale par rapport à la paroi (2).

10. Dispositif de traversée murale selon l'une quelconque des revendications 1 à 9, **caractérisé en ce que** les soufflets (9,10) présentent respectivement une partie pied (13,14) en forme d'un corps annulaire et sont fixés à celui-ci de façon étanche à des côtés opposés de la partie bride (18).

11. Dispositif de traversée murale selon la revendication 10, **caractérisé en ce que** les parties pied (13,14) des soufflets de guidage (9,10) entourent la partie guidage (17) du guidage à palier lisse (7) en laissant respectivement une fente annulaire (24,25) et les orifices de transfert sont disposés dans la partie bride (18) du guidage à palier lisse (7) et les fentes annulaires (24,25) sont raccordées l'une à l'autre.

12. Dispositif de traversée murale selon la revendication 11, **caractérisé en ce que** la partie bride (18) du guidage à palier lisse (7) est vissée au moyen d'une pièce de serrage (19) dans la paroi (2) sur le côté non stérile (1) de celle-ci et serre la partie pied (13) du soufflet (9) de façon étanche contre la partie bride (18).

13. Dispositif de traversée murale selon la revendication 12, **caractérisé en ce que** la partie pied (14) du soufflet (10) disposé sur le côté de paroi stérile (3) se met dans l'ouverture de traversée murale (4) en position d'encastrement des parties de dispositif, un épaulement annulaire (16) entourant l'extrémité libre de la partie pied (14) étant logé et fixé axialement dans un agrandissement (4') de l'ouverture de traversée murale (4) adjacent au côté de paroi non stérile (1).
